# EUROPEAN PATENT SPECIFICATION

(11) **EP 3 841 035 B1**
(45) Date of publication and mention of the grant of the patent: **03.08.2022**
(21) Application number: 19753114.8
(22) Date of filing: 19.08.2019
(51) Int. Cl.: B65D 85/804

(54) **PACK FOR PREPARING FOOD OR BEVERAGE PRODUCTS**
PACK ZUR HERSTELLUNG VON LEBENSMITTEL- UND GETRÄNKEPRODUKTEN
EMBALLAGE POUR PRÉPARER DES PRODUITS ALIMENTAIRES OU DE BOISSON

(30) Priority: 20.08.2018 EP 18189827
(43) Date of publication of application: 30.06.2021
(73) Proprietor: Société des Produits Nestlé S.A., 1800 Vevey (CH)
(72) Inventor: JARISCH, Christian, 1095 Lutry (CH)
(74) Representative: Navarro Fernández, Maria Isabel
(86) International application number: PCT/EP2019/072125
(87) International publication number: WO 2020/038880

(56) References cited:
- WO-A1-99/05044
- WO-A1-2014/125123
- WO-A1-2016/023729
- WO-A1-2017/137371

## Description

### Field of the invention

The present invention relates to a pack for preparing food or beverage products, the pack comprising an insert and a container: a fluid is introduced in the container through the insert in order to prepare the corresponding food or beverage product.

### Background of the invention

Preparing beverages by introducing a capsule containing a food or beverage ingredient, such as ground coffee or instant coffee, in a beverage dispensing machine and injecting water into the capsule is known in the state of the art: the beverage or food ingredient is typically extracted or dissolved into water to form the beverage or the desired final product, which flows out of the capsule through a suitable outlet.

As such, different capsules have been developed in the past, these capsules being at least differentiated by the nature of the capsule body used for storing the food or the beverage ingredient. Whereas most of the capsules are made of a rigid body or semi-rigid body, typically made though injection moulding or thermoforming, flexible types of packs can be made out of foil materials. Flexible packs have generally the advantage to semi-rigid and rigid capsules that less amount of material is used to pack the product leading to overall less production cost, to lower life cycle impact shown in several life-cycle assessments and to advantages on the part of the user, who will need less available space for storing these packs, as they are more compact.

For example, WO 99/05044 describes a flexible beverage-producing sachet comprising a beverage ingredient in a volume formed by bonding two laminates at their edges, having a base seam into which a conduit of rigid plastics is bonded. An inlet nozzle is provided at the top of the resulting sachet for introducing water that is mixed with the beverage or food ingredient inside the inner volume of the sachet, the beverage produced being then evacuated through a beverage outlet arranged at the bottom of the pack, where closing means are provided, such that the closing means are adapted to open under pressure when pressurized water is introduced into the sachet, allowing the beverage to evacuate through the beverage outlet. However, this configuration presents important drawbacks for the consumer: the opening of the closing means is obtained by increase of pressure inside the sachet. Yet this pressure increase is not recommended for the preparation of some beverages because it creates bubbles at the surface of the beverage, for example this would not be desired for the preparation of tea. Besides, there exists the risk for the user that the packages may not rupture at the desired pressure, and that they would finally open up in an uncontrollable explosion. For this reason the apparatus where the sachet is processed needs to comprise means for totally enclosing the sachet in the machine during beverage preparation in order to avoid risk of damages for the consumer.

Some other flexible sachets are also known in the state of the art, for example as per WO 2011/024103, disclosing a flexible pouch or sachet for preparing a beverage such as coffee, comprising a space where a concentrated dose of the product is stored. The pouch comprises also a rigid part on one of the sides of the pouch, provided with an inlet through which water is inserted into the pouch, a tube element conveying the water towards the opposite part of the pouch, so that the mixing of the water and the ingredient is made, and an outlet through which the product is dispensed. During the preparation of the beverage the beverage outlet is positioned at the top of the pouch. Water is introduced through the inlet and through the tube element until it fills the pouch and overflows through the beverage outlet positioned at the top of the pouch too. Such a pouch is conceived for preparing a beverage by extraction of roast and ground coffee but not by dissolution of instant coffee or other soluble materials. For this reason the pouch comprises a filter at the outlet to prevent insoluble particles from being dispensed with the beverage. An inconvenient of such a pouch is that at the end of the preparation of the beverage and the introduction of water, beverage remains in the pouch which is an issue for the user who cannot properly remove the pouch from the beverage production machine.

In the known flexible pouches or sachets described in the known prior art, neither the water inlet nor the beverage outlet are closed by a membrane, which is not recommended in terms of hygiene and shelf life as it could present problems to the consumer. Moreover, in these known systems, the insert or spout represents a weak point as it is typically made of plastics material such as PE or PP which does not form a barrier for oxygen. By the mode the spout is typically sealed with the flexible container or sachet, there are points or paths allowing oxygen to enter the inside of the container, therefore accessing the product stored in it, which represents a weak point from hygienic point of view.

Another document known from the state of the art is for example US 2014/0233871 A1, disclosing a plastic closure device for a tubular bag from a plastic material or from a multi-layered plastic film, in which the plastic closure device comprises at least one lower part with a spout, a spout opening and a flange. The plastic closure device is placed at the desired point onto the shell material (plastic or multi-layered plastic film) of the tubular bag and then welded to the shell material in the region of a flange. The joining of the bag with the spout does not represent an oxygen barrier either, further existing risk of leakage and dirt accumulation in case of not having a proper sealing of the bag and the spout.

Document US 8205771 B2 discloses a dispensing system for dispensing a pumpable product from a pouch: the pouch comprises a pouch fitment disposed on an inner or outer surface of the first wall of the pouch, wherein the pouch is positioned in the base fitment-side facing up. Similarly as the arrangement in US 2014/0233871 A1, no oxygen barrier is formed between the flexible container and the fitment assembly, which once again could present problems of leakages and dirt accumulation.

The patent application EP 16155317.7 belonging to the applicant discloses a pack comprising a pouch formed by at least one flexible sheet folded in such a way to configure the container comprising inside one or more ingredients for the preparation of a beverage: the one or more flexible sheets are arranged overwrapping and matching the shape of an insert or fitment through where the fluid is introduced in the inner volume of the container for the preparation of the beverage. Also, the beverage is delivered through the fitment, once prepared. This solution can be, however, improved on certain functionalities, such as for example: a better and faster dissolution of the product comprised in the pouch, typically a powder, by creating higher turbulences helping to a better mixing and/or product reconstitution: or for example preventing that any powder product in the volume inside the pouch comes into the insert and may block it, as the powder can be very thin and formed of very small particles.

Therefore, it is an object of the present invention to provide an improved solution to certain functionalities, as the ones mentioned, to the pack of patent application EP 16155317.7 of the applicant, as it will be further explained. The invention also aims at other objects and particularly at the solution of other problems as will appear in the rest of the present description.

### Summary of the invention

According to a first aspect, the invention relates to a pack for preparing a food or beverage product from one or more ingredients, the pack comprising an insert through where the food or beverage product is delivered, and such that a fluid to prepare the food or beverage product from the ingredients is also delivered into the pack via the insert through an injection hole and into an inlet chamber: the pack also comprises a container configured by at least one flexible sheet folded in such a way to configure a container where one or more ingredients can be stored, and such that the insert is overwrapped by the at least one flexible sheet configuring the container. In the pack of the invention, the inlet chamber communicating with the inner volume of the container is closed by a membrane, breakable by pressure.

Preferably, in the pack of the invention, the dimensions, the material of which it is made of and/or the thickness of the membrane are set-up depending on preparation parameters, fluid pressure, type of ingredient or ingredients inside the pack and/or temperature of the fluid. Typically, the membrane is made of cellophane and/or of aluminium and/or of polypropylene.

In the pack of the invention, the membrane can cover the surface of the inlet chamber and/or a substantially small area around it. According to a different embodiment, the membrane can cover substantially the whole upper area of the insert in communication with the inner volume of the container.

Typically, in the pack according to the invention, the at least one flexible sheet is arranged overwrapping and matching the shape of the insert in its entirety except for the part of the insert in direct communication with the inner volume of the container. Preferably, the at least one flexible sheet is arranged tightly sealed over the insert.

In a preferred embodiment, the distance of the insert which is overwrapped in any of its transversal direction along its longitudinal axis is constant.

In the pack of the invention, the at least one flexible sheet is preferably arranged tightly over the frontal and rear parts of the insert and matching these frontal and rear parts, such that there is a part of flexible sheet material configuring part of the pack arranged below the insert. Typically, the part of flexible sheet material configuring part of the pack arranged below the insert is a sealing. More preferably, there is an empty volume below the insert.

Typically, the pack of the present invention comprises a tear-off line configured in such a way to allow detaching a certain part of the sheet to release at least part of the insert.

In the pack of the invention, the insert preferably comprises at least two parts moveable with respect to each other, providing open or close communication with the inner volume of the pack.

The insert in the pack of the invention typically comprises an inlet hole through where the fluid is injected, the inlet hole being configured reversibly accessed in the insert.

The pack of the invention can be configured as a capsule, as a sachet, as a pouch or the like, for example.

Typically, the pack according to the invention further comprises identification means comprising information on process parameters to produce the food or beverage product, the process parameters being at least one or a combination of the following: temperature of the aqueous fluid injected, pressure of the gaseous fluid injected, total volume of gas and water injected, processing time, etc.

According to a second aspect, the invention relates to the use of a pack as the one described for preparing a food or beverage product.

Yet according to a third aspect, the invention relates to a method for producing a food or beverage product using a pack as described, the method comprising the steps of:
- optionally detaching at least part of the flexible film configuring the pack in order to leave apparent at least part of the insert;
- placing the pack in a beverage preparation machine by placing the insert in a corresponding receiver in the machine;
- injecting a fluid through the insert into the inner volume of the pack for mixing and/or diluting and/or reconstituting the food or beverage product inside and delivering the prepared food or beverage product through the insert.

Typically, in the method of the invention, the insert is configured by at least two relatively moveable parts, this movement blocking or freeing the communication of the inner volume of the pack with the outside of the pack.

Preferably, in the method of the invention, the insert is configured by at least two relatively moveable parts that move with respect to each other to their original position at the end of the preparation of the food or beverage, blocking any communication of the inner volume of the pack with the outside of the pack, to avoid dripping.

### Brief description of the drawings

Further features, advantages and objects of the present invention will become apparent for a skilled person when reading the following detailed description of non-limiting embodiments of the present invention, when taken in conjunction with the appended drawings, in which:
Figs. 1a-b show in detail the insert used in a pack for preparing food and beverage products according to the present invention, in a closed and an open position, respectively.
Fig. 2 shows a pack for preparing food or beverage products according to a first embodiment of the invention, where the insert is overwrapped by the film(s) configuring the pack.
Fig. 3 shows a pack for preparing food or beverage products according to a second embodiment of the invention, where the insert is overwrapped by the film(s) configuring the pack.
Fig. 4 shows an insert comprising a closing membrane used in a pack for preparing food or beverage products according to the present invention.
Figs. 5a-d show consecutive steps in the injection of fluid at pressure and its introduction by means of high turbulence bursting and jet inside the pack, in a pack for preparing food or beverage products according to the present invention.

### Detailed description of exemplary embodiments

According to the present invention, a *pack 100 is disclosed for preparing* a *food or beverage product*, the pack comprising a container 20 and an insert 10. The container 20 comprises at least one ingredient for the preparation of the food or beverage product, such as a powder product. Typically, according to a preferred embodiment of the invention, the preparation of the product is made by introducing a fluid through the insert 10, typically water and/or air, so the ingredient is mixed and/or diluted and/or reconstituted before being delivered through a dispensing outlet, which is also arranged in the insert 10. In this case, the insert is used to inject a fluid inside the volume of the pack so that a beverage or food product is prepared typically from a concentrated product, such as powder. The insert is also used to deliver the product once it has been prepared.

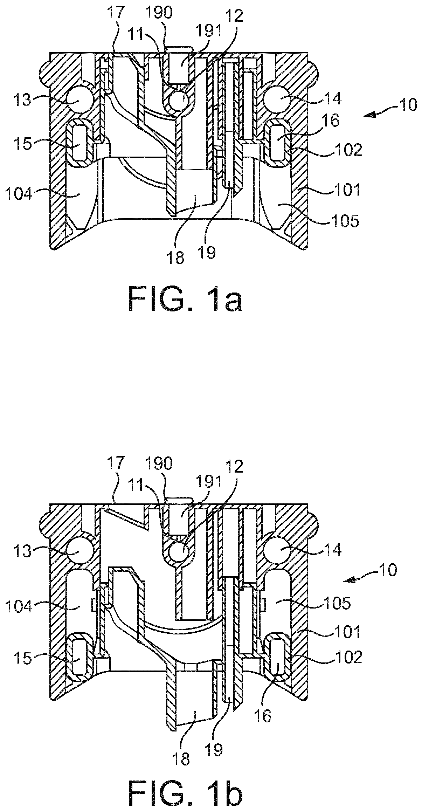

Figures 1a and 1b show in detail the configuration of the insert 10 in the pack 100 of the invention: Figure 1a shows the configuration where the outlet is closed and Figure 1b shows the configuration with the outlet open for delivering a beverage or food product. The insert 10 of the invention typically comprises two parts, 101 and 102, moveable with respect to each other, preferably by linear displacement. The part 101 is a fixed insert part, which is fixed to or by means of the beverage preparation device, and the part 102 is a moveable insert part, moveable with respect to the part 101. The fixed insert part 101 is positioned in the beverage preparation device by means of positioning holes 13 and 14. The beverage preparation device connects with the moveable insert part 102 through displacing holes 15, 16, displacing the insert part 102 linearly downwards by the linear paths 104, 105.

In Figure 1a, the moveable insert part 102 has not been displaced with respect to the fixed insert part 101, and the inner outlet 17 is closed by the positioning of the moveable insert part 102, blocking said outlet 17, so no beverage can be dispensed through the beverage outlet 18. A fluid, typically water, is injected through the inlet hole 12 typically by a water or fluid needle that is then conveyed through a small injection hole 11 into an inlet chamber 191 and, from there, into the inner volume of the container 20, in order to mix and reconstitute the beverage or food product inside. When the beverage has been prepared, the device displaces the moveable insert part 102 with respect to the fixed insert part 101, as shown in Figure 1b: the beverage prepared inside the container 20 can exit the inner volume through the inner outlet 17 (now not blocked, as the moveable insert part 102 has displaced) and from there go into the beverage outlet 18 and then be dispensed. Also, an air conduct 19 can be provided in the moveable insert part 102: no air can go through this conduct 19 in the closed position shown in Figure 1a: however, when the part 102 has moved with respect to 101, as represented in Figure 1b, air from the outside of the pack 100 can go into the air conduct 19 so the beverage can be delivered with a certain degree of foaming: air is then driven to the inlet chamber 191.

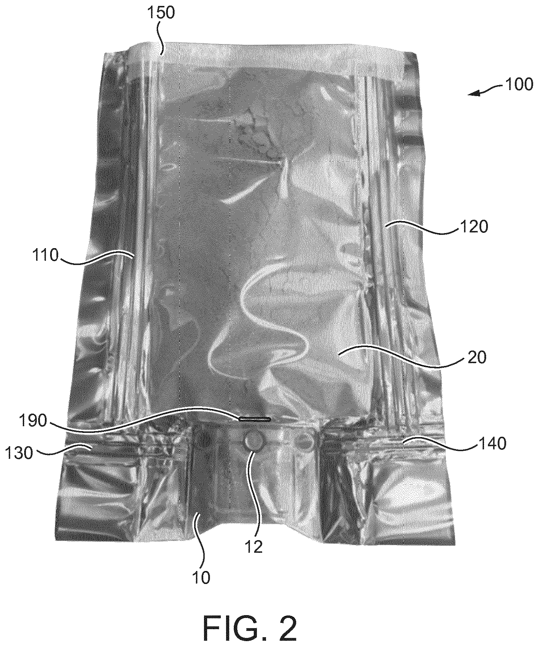

Looking now at Figure 2, a pack 100 according to a possible embodiment of the invention is shown: this pack 100 comprises a container 20 and an insert 10 that is overwrapped by the flexible sheet configuring the container 20. This is typically the configuration in European Patent Application EP 16155317.7 belonging to the applicant. As shown in Figure 2, one flexible sheet of material is folded overwrapping the insert 10 and conforming to the shape of it, over the whole of its surface, except for the upper part of it which is in contact with the inner volume of the container 20. Also, the shape of the insert 10 is preferably made in such a way that a proper overwrapping is achieved without wrinkles. As such, the flexible sheet is typically arranged tightly sealed over the insert 10 and the insert 10 is configured so that the distance which is overwrapped in any of its transversal direction along its longitudinal axis is constant. Both the design of the insert 10 and the way of doing the overwrapping of the film over it have to be very precisely executed. In order to close tightly the pack 100, the film is then sealed in several parts to configure the container 20: as shown in Figure 2, lateral or side sealing 110 and 120 are provided, as well as an upper sealing 150 and lower sealing 130, 140. The film or flexible sheet is also sealed over the frontal and the rear sides of the insert 10. Therefore, the injection means (fluid needle) pierce the film when connecting with the inlet hole 12.

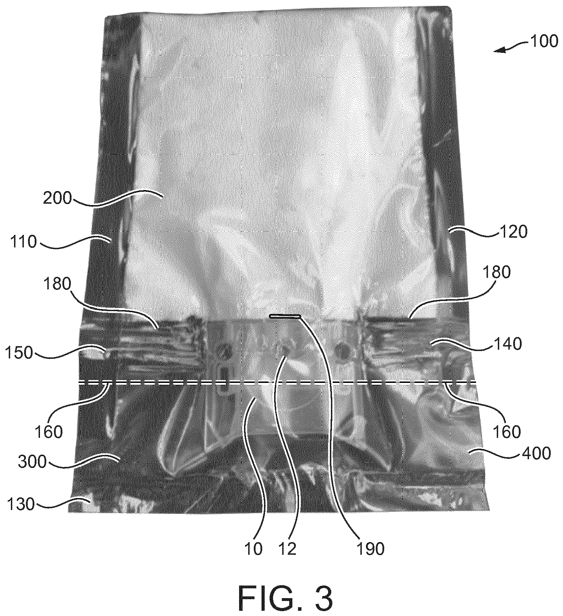

A second possible embodiment of a pack 100 according to the invention is represented in Figure 3: the container 20 is configured by a flexible sheet or film overwrapping inside its volume the insert 10. In fact, there are two separated volumes configured in the pack 100: a product volume 200, which is the part of the pack 100 where the food or beverage product is arranged, and an insert volume 300, which is the part of the pack 100 where the insert 10 is arranged inside. The film or flexible sheet overwraps the insert 10 but does not have to conform to the shape of it, as it is the case in the first embodiment shown in Figure 2, as the insert is isolated and arranged apart in the insert volume 300. The product and the insert are thus arranged separately during storage and long-time storage of the packs. The manufacturing and configuration of the pack of the invention is simpler than in the embodiment shown in Figure 2, without the need to conform to the shape of the insert in order to provide a barrier for the insert. The separation between the two zones or volumes, product volume 200 and insert volume 300, is ensured by the insert 10 and by the middle product sealing 140, 150.

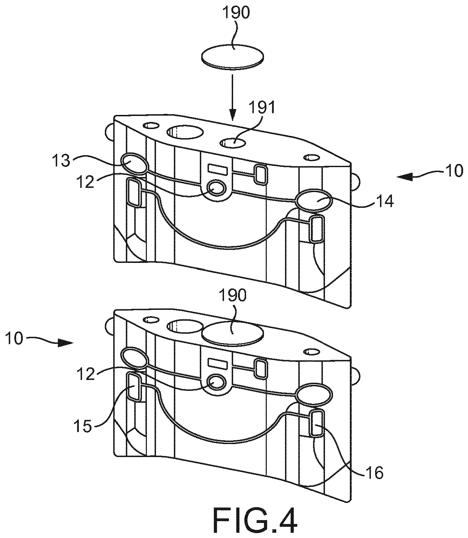

As schematically represented in Figures 1a-b or 2, the insert 10 further comprises a membrane 190 that covers and closes the inlet chamber 191. A further schematic detail is shown also in Figure 4, where a possible embodiment of a membrane or film element is represented, closing the inlet chamber 191. When a water or fluid needle pierces the frontal film overwrapping the insert 10 and injects water at a certain pressure into the inlet chamber 191, at first the water is not able to break open the film or membrane 190 covering the inlet chamber 191, so no fluid can go into the inner volume of the container 20. However, when a certain time has elapsed, the cumulated pressure in the inlet chamber 191 has enough strength to burst and open the said membrane 190. The fact that there is provided an inlet chamber 191 in the design of the insert 10 helps the deformation of the membrane 190 and its final bursting, creating the turbulences needed for the mixing of the food or beverage product, as it will be further explained.

In the Figures attached, it is shown that the membrane 190 covers just the part corresponding to the inlet chamber 191 or a bigger part around it, but it is mainly restricted to this area. However, a different alternative would also be possible, where the film or membrane 190 would cover most or the whole of the upper part of the insert 10 (i.e. the part of the insert communicating directly with the inner volume of the container 20). In this second case, the area of the inner outlet 17 is left not covered (i.e. free from film or membrane) or, optionally, if it is covered by the membrane, the moveable part 102 of the insert will first move linearly upwards in order to tear the film closing it and will then move linearly downwards once the food or beverage product has been prepared and has to be delivered. Choosing one or the other solution would be mostly a manufacturing decision, depending on the manufacturing placing process for the membrane film, for example.

When a membrane 190 is used in an insert 10 as the one of the invention, as the inlet chamber 191 is blocked (closed) during storage or non-usage of the pack, no powder particle (depending on the food or beverage product inside the container, these particles can be extremely thin) can enter the inner space of the insert 10, which could block and/or limit and/or difficult the movement of the parts 101, 102 with respect to each other for the product preparation and/or dispensing.

Furthermore, as the membrane 190 has to be burst and tear open by fluid (water pressure), the bursting of the membrane creates a very strong fluid turbulence inside the volume of the container 20, which helps to get a very good and homogenous dissolution of the powder product inside. As the pack can be stored for a long period of time and so the powder kept inside of it can be placed very randomly, a high turbulence of the fluid dissolving it is highly desired. Not only is a faster dissolution achieved but also a more homogenous one, so the final food or beverage product delivered is of a higher quality and more consistent.

The material of the membrane 190 can vary: it can be made, for example, of the same material as the flexible film typically configuring the container 20 of the pack (but of lower thickness). Other preferred possibilities are, for example, cellophane, a thin aluminium membrane layer, or a polypropylene (PP) membrane.

The dimensions, the material of which it is made of, and/or the thickness of the membrane 190 can be set-up depending on dissolution parameters, water pressure, type of food or beverage product inside the pack, temperature of the water, amongst others.

In the pack of the invention, as shown in Figure 3, there are side sealing 110, 120 provided on at least part of the side height of the pack 100 (on both sides). The sealing is preferably of the thermos-sealing type. Further, middle product sealing 140 and 150 are provided on the two sides of the container 20 from the insert 10 to the side sealing 110, 120 as shown in Figure 3. A lower sealing 130 closes the insert volume 300, enclosing the insert 10. Furthermore, the pack 100 of the invention, in particular the container 20, further comprises a tear-off line 160, arranged between the middle product sealing 140, 150 and the lower sealing 130. This tear-off line 160 is configured weakened in such a way that a consumer will easily detach the film or flexible sheet part 400 by pulling this part that will follow the tear-off line 160: once the detachable film part 400 is removed from the pack 100, at least part of the insert 10 is released and this allows the correct placing of the insert, and therefore of the pack, in the corresponding beverage preparation machine. This represents an advantage of the configuration of the pack according to the second embodiment shown in Figure 3 as the specific shape of the insert allows to be correctly placed in a beverage preparation machine, and it is important to do that correctly as the parts of the insert 10 need to be moved with respect to each other to inject the fluid and let it be dispensed once the beverage is prepared. Thus, it is clear that a correct positioning of the insert and of the pack in the machine is essential. With this configuration (second embodiment, Figure 3), once the insert has been at least partially released from the rest of the film in the pack, the placement of it in the machine (which is specifically designed in shape to receive the said insert) is evident and easy to do, and avoids mistakes of wrong placements which can lead to a wrong actuation of the parts of the insert and thus to incorrect dissolutions. The tear-off line 160 can be configured in different ways, but will allow detaching a film part 400 to release at least part of the insert: preferably, the displacing holes 15, 16 will typically be released once the detachable film part 400 is removed, and so will be the linear paths 104, 105. The inlet hole 12 will be covered by the film and will be pierced by the piercing and injecting means (typically a needle) and the positioning holes 13, 14 as they are typically arranged in a similar height to that of the inlet hole, they are also typically covered by the film even when the detachable film part 400 is removed.

By removing a part of the film configuring the container 20 of the pack 100 of the invention, namely the removable part 400, at least part of the insert 10 is left free, which allows correctly placing the pack in the corresponding beverage preparation device and also properly accessing the insert 10 and moving the two parts of it 101, 102 with respect to each other in order to prepare the beverage and dispense it. While the pack 100 is not in use, the food or beverage product contained in the product volume 200 remains tight and correctly preserved. Moreover, as the insert 10 is covered by film (is overwrapped) in the insert volume 300, it is also hygienically preserved. Only when the pack is going to be used, the consumer will tear-off the detachable part 400, releasing at least part of this insert 10: therefore, the consumer will be able to correctly place the pack (by means of placing the insert 10 in the corresponding receiving cavity of the beverage preparation device) in the device for its use. It is essential that the pack 100 is correctly placed for the operation needed on the insert 10 (on the operation of the two parts of the insert) and also the pack should remain essentially vertically arranged during the beverage preparation, for correct injection of the fluid, dissolution of the product inside the volume 200 and dispensing of the food or beverage prepared.

Additionally, and optionally, the pack of the invention (as shown in Figure 3) can further comprise a recycling tear-off line 180: the purpose of this extra tear-off line is to detach, once the beverage has been prepared and has been fully dispensed, the flexible film parts and the insert 10. Typically, the flexible film parts will be made of a different material than that of the insert 10, so the insert can be recycled separately from the rest of the pack material.

With the second configuration of the pack of the invention, product freshness is ensured for the consumer. Moreover, as the pack will be opened (tear open) by the consumer, this provides a tamper proof indication that the pouch is in good condition and that it has not been previously manipulated: thus, incorrect pack opening issues are avoided. The pack ensures the functionality of the insert and protects it against foreign bodies' intrusion that would be the case when the spout would not be overwrapped by the film.

If the pack 100 is configured according to a first embodiment of the invention (Figure 2), in this case the insert 10 is fully overwrapped by the film configuring the container 20. In this case, the needle will first pierce the film over the inlet hole 12 and will start injecting fluid through it, through the injection hole 11 into the inlet chamber 191 and into the inner volume of the container 20 (once the membrane 190 has been broken or burst). Once the beverage has been prepared by dissolution, the moveable part 102 will displace with respect to the fixed part 101 and will tear open the film covering the lower part of the beverage outlet 18, thus leaving free the dispensing path for the prepared food or beverage product.

If the pack is configured according to the second embodiment of the invention (as shown in Figure 3), the needle will pierce the film covering the inlet hole 12, will inject fluid through it and from there through the injection hole 11 and into the inlet chamber 191, until the membrane 190 has deformed and burst. Then, fluid is injected inside the volume of the container 20, a jet is created and the food or beverage product is prepared by dissolution. Once prepared, the moveable part 102 of the spout will displace with respect to the fixed part 101 and will allow the path to its dispensing through the beverage outlet 18 (once the consumer has removed the detachable film part 40, the beverage outlet 18 is left free and allows delivering the food or beverage by displacing the part 102 with respect to 101, unblocking the inner outlet 17).

Preferably, in order to make the pack 100 reversible, the insert 10 comprises an inlet hole 12 that is a through hole or that can be accessed frontally and on its rear side with blind holes, still able to be accessed from both sides of the pack, frontal and rear side. Preferably, the insert 10 is identical on both its front and rear sides.

According to the present invention the food or beverage ingredient of the container can be comprised within the list of: soups, fruit juices, vegetable juices, bouillons, coffee, chocolate, tea, milk or creamer, smoothies, purees, coulis, creams or a combination thereof. The food or beverage ingredient can be a soluble food or beverage ingredient. Preferably the food or beverage ingredient is a soluble food or beverage ingredient selected in the list of:
- instant coffee powder, milk powder, cream powder, instant tea powder, cocoa powder, soup powder, fruit powder or mixture of said powders,
- a coffee concentrate, a milk concentrate, a syrup, a fruit or vegetable concentrate, a tea concentrate, a fruit or vegetable puree.

The powders can be agglomerated or sintered. The powders or liquid concentrates can be mixed with solid pieces for example for preparing soups with solid or encapsulated pieces. The food or beverage ingredient can also be an infusable food or beverage ingredient like a roast and ground coffee or tea leaves. In that embodiment water extracts the infusable ingredient.

In the present invention fluid covers either any aqueous diluent that can be mixed with a soluble beverage ingredient to prepare a beverage, like water, carbonated water, milk, etc. (preferably, water is the preferred aqueous diluent) or any gaseous fluid such as for example air. When referring to aqueous fluid, water is the preferred fluid; when referring to gaseous fluid, air is the preferred fluid.

The pack 100 of the invention can be configured having any possible shape, such as a pouch (flexible, for example), a sachet, a capsule, or any other possible container shape.

In contrast with most of the systems in the known prior art, where the fluid is introduced from top to bottom, the pack of the invention works injecting water and also preferably air from bottom to top at high velocity, which allows optimal turbulences created inside the container and therefore optimal dissolution of the product inside. The air through the injecting means is not introduced at high pressure: the pressure is preferably comprised between 0.1 and 1.5 bar, more preferably between 0.3 and 0.5 bar. According to the invention, optimal turbulences and dissolution are obtained by high velocity, not by high pressure.

Preferably, the aqueous fluid (water) is injected at a pressure higher than 2 bar, more preferably higher than 3 bar, preferably comprised between 2 and 10 bar, more preferably of around 7 bar. The inlet 12 is configured in such a way that the high pressure fluid injected through it by the injecting means is converted into a high velocity jet, which is driven into the container 20. Typically, the diameter of this inlet is comprised between 1 mm and 4 mm, more preferably between 1.5 mm and 3 mm and comprises a yieldably cover over it which can be pierced by the injecting means. With such a configuration, the high pressure fluid injected by the injecting means is conveyed internally towards the injection hole 11, from which it is converted into a high velocity jet of fluid injected inside the container through the inlet chamber 191. Typically, this jet of fluid provided in the container has a velocity of at least about 20 m/s, preferably of at least 30 m/s.

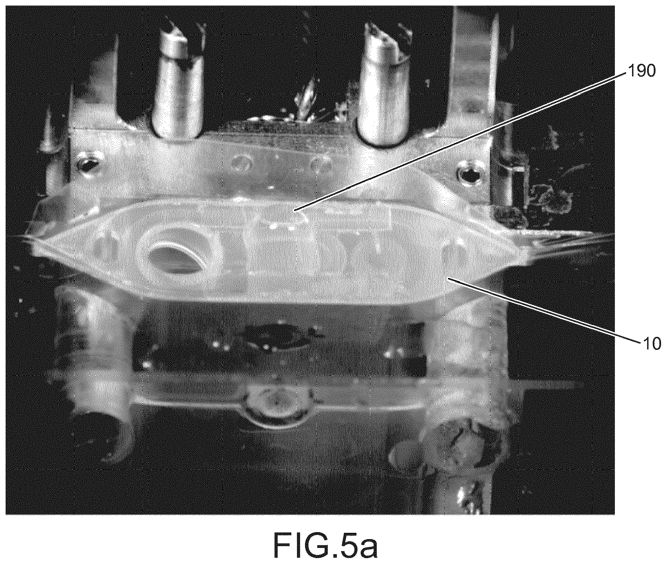

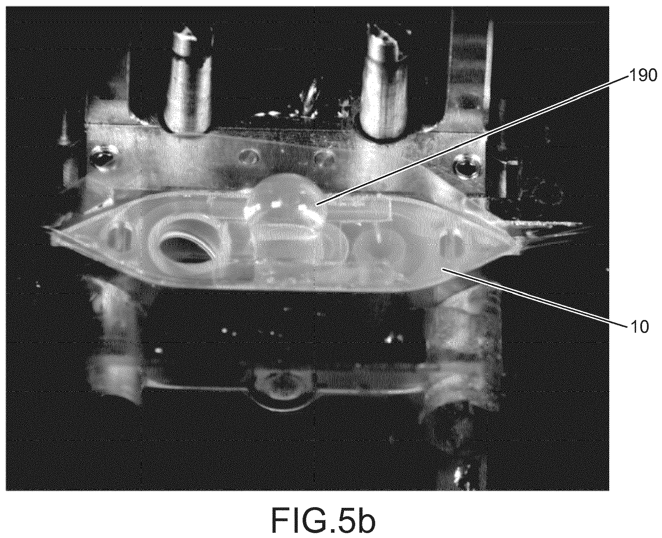

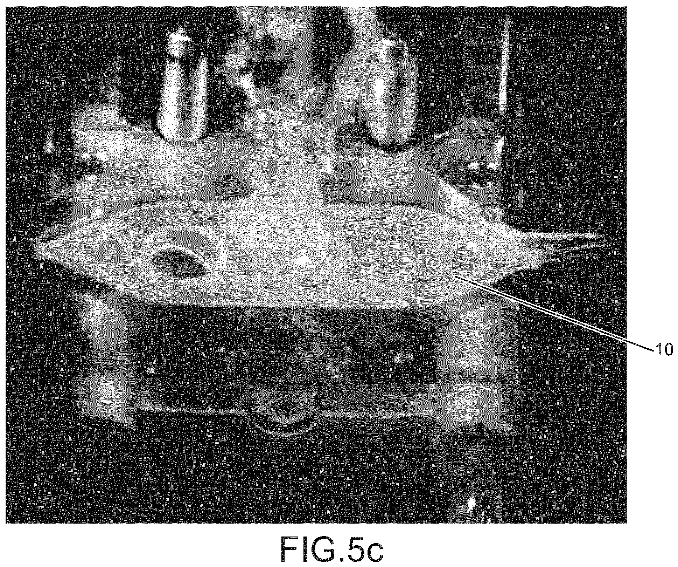

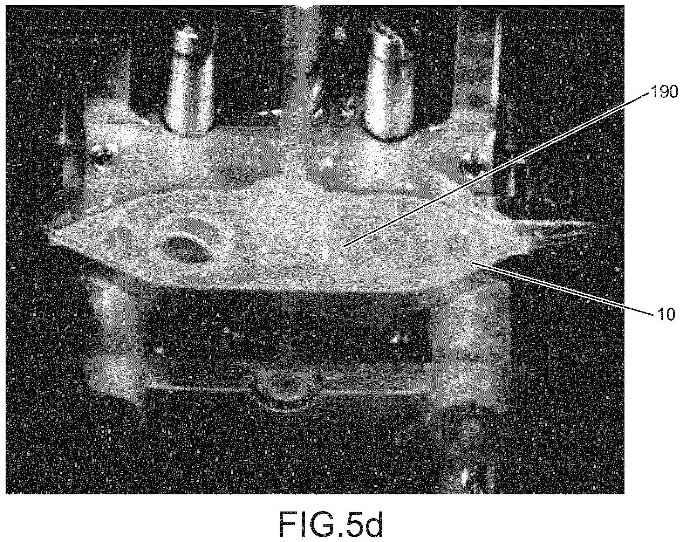

As shown in Figures 5a-d, the configuration of the insert 10 according to the present invention further comprises a membrane 190 closing the inlet chamber 191. Therefore, when the fluid, typically water, starts being injected at a certain pressure through the inlet hole 12, the membrane 190 is not broken at first and withstands a certain pressure of the fluid injected. Depending on the dimensions and/or material and particularly on the thickness of the membrane 190, it will hold pressure upon a certain moment in time. Figure 5a shows an early moment when fluid has started to be injected at pressure through the inlet hole 12 and from there through the injection hole 11 and into the inlet chamber 191, the fluid being held by the deformation of the membrane 190. As time elapses and more fluid is injected through the inlet hole 12 into the inlet chamber 191, the deformation of the membrane 190 is bigger, until it reaches a final deformation position, as shown for example in Figure 5b. Once this happens and the membrane 190 is not capable of withstanding more fluid with its deformation, it bursts as represented in Figure 5c: in this moment, the fluid enters the inner volume of the container 20 with strong turbulence and agitation, entering in contact with the powder food or beverage product inside the said container 20, to dissolve and/or dilute it. Figure 5d shows the moment when the membrane 190 has been totally burst and a jet of fluid has been properly formed, at high velocity, and comes into the inner volume of the container 20. The fluid jet and the turbulences created inside the container avoid that the food or beverage product flows through the beverage outlet 18 too rapidly, even when the parts 101 and 102 have already moved with respect to each other.

The small dimension of the injection hole 11 compared to that of the inlet hole 12 allows introducing the fluid under the form of a jet in the inlet chamber 191 and into the inner volume of the container. By jet it is understood a stream of liquid or fluid into the inner volume of the container quickly and with force.

The membrane 190 closing the inlet chamber 191 presents the advantage of avoiding any powder product entering the inner volume of the insert 10 when the pack is not in use. Moreover, the very reduced dimension of the injection hole 11 presents the advantage of reducing any back flow of fluid from the inner volume of the container into the inlet hole. For the same fluid to be provided through the inlet hole, the surface of the injection hole can vary according to the nature of the food and beverage ingredient inside the container which is to be mixed with the fluid. In particular when the ingredient is difficult to dissolve, a smaller injection hole creates a jet with a higher velocity which improves agitation and dissolution of this ingredient in the container.

The insert 10 is preferably rigid and is made of a rigid plastic material, preferably by injection moulding. Typically, this plastic material can be selected from the following: polypropylene, polyethylene, polyethylene terephthalate and polylactic acid. Also according to a less preferred embodiment the insert 10 can be made of a metal like aluminium or tin-plate.

Different sizes of the pack 100 can be used in a same beverage preparation machine adapted to store different quantities of ingredients: typically, it is the configuration of the insert 10 as to external shape and piercing requirements of the inlet hole 12 what determines the machine to use; however, the size of the containers, when extending vertically, does not determine or limit the machine. As a consequence, it becomes possible to produce different products, such as for example a cup of espresso coffee or a bowl of soup, with the same machine. The external design of the insert 10 will remain unchanged independently on the product targeted; however, the internal design of the insert 10, in particular as to the diameter of the injection hole will differ as a function of the ingredient to be processed and therefore as a function of the food or beverage product targeted. The main idea is that the interface of the insert with respect to the machine remains unchanged. Also, other parameters such as the flow rate of fluid injected and/or the temperature of the fluid injected and/or the total volume of fluid injected, will be modified as a function of the ingredient to be processed and therefore as a function of the food or beverage product targeted.

The pack 100 can also comprise an excrescence enabling the handling of the pack by the user or consumer: this has not been shown in the Figures attached, though.

According to the invention, either the insert 10 and/or the container 20 preferably comprise identification means with the information for fluid or fluids supplied in the inner volume of the container 20 from the inlet hole. Such identification means can comprise any kind of recognition means such as, for example, mechanical codes, optical codes, RFID tags, bar codes, magnetic codes, detection holes or the like.

The identification means also comprise the information on process parameters to produce the food or beverage product when the pack is connected to a beverage preparation machine or device. In this case, the device will comprise a control unit that will retrieve the information on the process parameters by reading the identification means on the pack, and will apply these parameters when preparing the corresponding food or beverage product. The process parameters are at least one or a combination of the following: temperature of the aqueous fluid injected, pressure of the gaseous fluid injected, total volume of gas and water injected, processing time, etc.

Preferably, as shown in the Figures attached, the pack 100 of the invention presents a plane shape oriented along a plane essentially vertically oriented during beverage production and the injection hole orientates the jet of aqueous and/or gaseous fluid in a direction comprised in said plane. The fluid jets introduced from the bottom into the container develop into circular and spiral movements creating turbulences, frictions and high contact surfaces between the fluid molecules and the ingredient particles. In average the fluid molecules have several turns within the container until they leave it together with the beverage or food product once mixed.

According to the invention, the container is arranged essentially vertically during the production and dispensing of the food or beverage product, and the insert 10 is arranged in such a way that the water and/or air coming from the inlet hole and through the inlet chamber is supplied into the container in an upward direction.

According to the present invention, the aqueous fluid, typically water, can be supplied into the container 20 at any temperature, cold, ambient or hot, depending on the type of food or beverage product targeted.

According to a preferred embodiment of the invention, typically a flexible sheet is folded so as to conform a pouch therefore configuring the container 20 comprising inside the ingredient or ingredients to prepare a food or beverage product out of it. Also preferably, this flexible sheet is further overwrapped around the insert 10 therefore hygienically protecting and isolating it.

Preferably the pack itself is substantially flexible and looks like a pouch or sachet. By flexible, it is meant that the sheets can be bent easily. The resulting pack 100 can be bent also, as being soft and can be deformed contrary to rigid containers. The flexible sheet material can be plastic laminates, metallised foil or alufoil or fibre base material, or a mix of these, further possibly being coated. According to the invention the two flexible water impermeable sheets can be formed of one single flexible water impermeable sheet folded in half and joined at its free edges.

According to a second aspect, the invention further refers to a *method for preparing* a *food or beverage product using a pack 100* as *previously described.* The method comprises:
- if the pack is configured according to the second embodiment of the invention (Figure 3), the consumer tears off by the tear-off line 160 the detachable film part 400, detaching said part 400 from the pack 100 and leaving at least part of the insert 10 free (apparent); if the pack is configured according to a first embodiment (Figure 2), then the consumer will simply place the pack in the beverage preparation machine;
- in any of the two cases disclosed above (embodiments according to Figure 2 or to Figure 3) the consumer inserts the pack 100 in a beverage preparation machine, correctly placing the insert 10 in the machine, in a place configured to receive said insert;
- the beverage preparation machine connects with the insert 10 by means of:
   positioning holes 13, 14; displacing holes 15, 16; inlet hole 12;
- the machine places vertically and in a substantially planar surface the pack 100, fixing the pack by the positioning holes 13, 14;
- the needle (piercing and injection means) of the machine pierces the film over the inlet hole 12 and injects a fluid at pressure through the injection hole 11 and into the inlet chamber 191, such that the fluid is held by the membrane 190 closing the inlet chamber 191, by its deformation, until a certain moment when this deformation is not possible to withstand the fluid pressure, and so the membrane bursts, creating first a high turbulence flow in the container volume followed by a fluid jet at high velocity: the jet of fluid mixes and/or dilutes and/or reconstitutes the food or beverage product inside the volume of the pack; the inner outlet 17 is blocked by the position of the moveable insert part 102, that has not been moved yet, so the beverage outlet 18 remains closed while the beverage is prepared;
- the beverage preparation machine also connects with the insert 10 through the displacing holes 15, 16: once the food or beverage product has been prepared (correctly mixed and/or diluted and/or reconstituted), the moveable insert part 102 displaces with respect to the fixed insert part 101 through the linear paths 104, 105 and the beverage outlet 18 is open so the beverage prepared can be delivered into a cup or the like (in the embodiment of Figure 2, the film covering the outlet 18 will be tear open by the displacement of the moveable part 102 of the insert and, in the embodiment of Figure 3, the movement of the parts 102 and 101 with respect to each other leaves free the inner outlet 17 and the communication to the outlet 18, no film blocking the exit of this outlet 18);
- once the beverage has been fully delivered, the process stops in the preparation machine and the moveable insert part 102 goes back to its original position, thus closing the inner outlet 17: therefore, the consumer can take out the used pack 100 from the machine without any risk of dripping;
- optionally, when the pack 100 is provided with a recycling tear-off line 180, the consumer can detach the insert 100 from the rest of the container (film) in order to separate both for a proper recycling.

The method of the invention allows to obtain a proper dissolution of the product inside the pack, and this is achieved by creating strong turbulences that will well mix and dissolve the product before it is delivered, particularly by the strong and violent bursting of the membrane 190 retaining the fluid injected at pressure, as explained. Preferably, pressurized water will be injected into the container 20. The configuration of the insert 10 also allows the introduction of air in the volume of the container 20 and/or together with the fluid injected in order to help achieving the turbulence, hence the dissolution, and also in order to create a foamed beverage or food product. Optimal turbulences help making a good dissolution, also improve foam creation and maintain under control the flow time of the product in cup.

Although the present invention has been described with reference to preferred embodiments thereof, many modifications and alternations may be made by a person having ordinary skill in the art without departing from the scope of this invention which is defined by the appended claims.

## Claims

1. Pack (100) for preparing a food or beverage product from one or more ingredients, the pack comprising an insert (10) through where the food or beverage product is delivered, and such that a fluid to prepare the food or beverage product from the ingredients is also delivered into the pack via the insert (10) through an injection hole (11) and into an inlet chamber (191); the pack also comprising a container (20) being configured by at least one flexible sheet folded in such a way to configure a container where one or more ingredients can be stored; the insert (10) being overwrapped by the at least one flexible sheet configuring the container (20); Z **characterised in that** J the inlet chamber communicating with the inner volume of the container (20) is closed by a membrane (190), breakable by pressure.

2. Pack (100) according to claim 1 wherein the dimensions, the material of which it is made of and/or the thickness of the membrane (190) are set-up depending on preparation parameters, fluid pressure, type of ingredient or ingredients inside the pack (100) and/or temperature of the fluid.

3. Pack (100) according to any of the previous claims, wherein the membrane (190) is made of cellophane and/or of aluminium and/or of polypropylene.

4. Pack (100) according to any of claims 1-3, wherein the membrane (190) covers the surface of the inlet chamber (191) and/or a substantially small area around it.

5. Pack (100) according to any of claims 1-3, wherein the membrane (190) covers substantially the whole upper area of the insert (10) in communication with the inner volume of the container (20).

6. Pack (100) according to any of the previous claims wherein the at least one flexible sheet is arranged overwrapping and matching the shape of the insert (10) in its entirety except for the part of the insert (10) in direct communication with the inner volume of the container (20).

7. Pack (100) according to claim 6 wherein the at least one flexible sheet is arranged tightly sealed over the insert (10).

8. Pack (100) according to any of claims 6-7 wherein the distance of the insert (10) which is overwrapped in any of its transversal direction along its longitudinal axis is constant.

9. Pack (100) according to any of claims 1-5 wherein the at least one flexible sheet is arranged tightly over the frontal and rear parts of the insert (10) and matching these frontal and rear parts, such that there is a part of flexible sheet material configuring part of the pack (100) arranged below the insert (10).

10. Pack (100) according to claim 9 wherein the part of flexible sheet material configuring part of the pack (100) arranged below the insert (10) is a sealing.

11. Pack (100) according to any of claims 9-10 wherein there is an empty volume below the insert (10).

12. Pack (100) according to any of the previous claims comprising a tear-off line (160) configured in such a way to allow detaching a certain part (400) of the sheet to release at least part of the insert (10).

13. Pack (100) according to any of the previous claims wherein the insert (10) comprises at least two parts (101, 102) moveable with respect to each other, providing open or close communication with the inner volume of the pack (100).

14. Pack (100) according to any of the previous claims wherein the insert (10) comprises an inlet hole (12) through where the fluid is injected, the inlet hole (12) configured reversibly accessed in the insert (10).

15. Pack (100) according to any of the previous claims configured as a capsule, as a sachet, as a pouch or the like.

16. Pack (100) according to any of the previous claims further comprising identification means comprising information on process parameters to produce the food or beverage product, the process parameters being at least one or a combination of the following: temperature of the aqueous fluid injected, pressure of the gaseous fluid injected, total volume of gas and water injected, processing time, etc.

17. Use of a pack (100) according to any of the previous claims for preparing a food or beverage product.

18. Method for producing a food or beverage product using a pack (100) according to any of claims 1-16, the method comprising the steps of:
- optionally detaching at least part of the flexible film configuring the pack (100) in order to leave apparent at least part of the insert (10);
- placing the pack (100) in a beverage preparation machine by placing the insert (10) in a corresponding receiver in the machine;
- injecting a fluid through the insert (10) into the inner volume of the pack (100) for mixing and/or diluting and/or reconstituting the food or beverage product inside and delivering the prepared food or beverage product through the insert (10).

19. Method according to claim 18 wherein the insert (10) is configured by at least two relatively moveable parts (101, 102), this movement blocking or freeing the communication of the inner volume of the pack with the outside of the pack.

20. Method according to any of claims 18-19 wherein the insert (10) is configured by at least two relatively moveable parts (101, 102) that move with respect to each other to their original position at the end of the preparation of the food or beverage, blocking any communication of the inner volume of the pack with the outside of the pack, to avoid dripping.

## Patentansprüche

1. Pack (100) zum Herstellen eines Lebensmittel- oder Getränkeprodukts aus einem oder mehreren Inhaltsstoffen, wobei das Pack einen Einsatz (10) umfasst, durch den das Lebensmittel- oder Getränkeprodukt abgegeben wird, und so dass ein Fluid zum Zubereiten des Lebensmittel- oder Getränkeprodukts aus den Inhaltsstoffen auch über den Einsatz (10) durch ein Einspritzloch (11) und in eine Einlasskammer (191) in das Pack abgegeben wird;
wobei das Pack auch einen Behälter (20) umfasst, der durch mindestens eine flexible Folie gebildet wird, die so gefaltet ist, dass sie einen Behälter konfiguriert, in dem ein oder mehrere Inhaltsstoffe aufbewahrt werden können;
wobei der Einsatz (10) durch die mindestens eine flexible Folie, die den Behälter (20) bildet, umhüllt wird;
**dadurch gekennzeichnet, dass**
die Einlasskammer, die mit dem Innenvolumen des Behälters (20) kommuniziert, durch eine Membran (190) verschlossen wird, die durch Druck brechbar ist.

2. Pack (100) nach Anspruch 1, wobei die Abmessungen, das Material, aus dem es hergestellt ist, und/oder die Dicke der Membran (190) in Abhängigkeit von Zubereitungsparametern, Fluiddruck, Art von Inhaltsstoff oder Inhaltsstoffen innerhalb des Packs (100) und/oder Temperatur des Fluids eingerichtet sind.

3. Pack (100) nach einem der vorstehenden Ansprüche, wobei die Membran (190) aus Cellophan und/oder aus Aluminium und/oder aus Polypropylen hergestellt ist.

4. Pack (100) nach einem der Ansprüche 1-3, wobei die Membran (190) die Oberfläche der Einlasskammer (191) und/oder einen im Wesentlichen kleinen Bereich um sie herum bedeckt.

5. Pack (100) nach einem der Ansprüche 1-3, wobei die Membran (190) im Wesentlichen den gesamten oberen Bereich des Einsatzes (10) in Verbindung mit dem Innenvolumen des Behälters (20) bedeckt.

6. Pack (100) nach einem der vorstehenden Ansprüche, wobei die mindestens eine flexible Folie angeordnet ist, um den Einsatz (10) in seiner Gesamtheit mit Ausnahme des Teils des Einsatzes (10), der in direkter Verbindung mit dem Innenvolumen des Behälters (20) ist, zu umhüllen und seiner Form anzupassen.

7. Pack (100) nach Anspruch 6, wobei die mindestens eine flexible Folie dicht verschlossen über dem Einsatz (10) angeordnet ist.

8. Pack (100) nach einem der Ansprüche 6-7, wobei der Abstand des Einsatzes (10), der in einer seiner Querrichtung entlang seiner Längsachse umhüllt wird, konstant ist.

9. Pack (100) nach einem der Ansprüche 1-5, wobei die mindestens eine flexible Folie dicht über den vorderen und hinteren Teilen des Einsatzes (10) angeordnet ist und diesen vorderen und hinteren Teilen angepasst ist, sodass ein Teil des flexiblen Folienmaterials einen Teil des Packs (100) konfiguriert, der unter dem Einsatz (10) angeordnet ist.

10. Pack (100) nach Anspruch 9, wobei der Teil des flexiblen Folienmaterials, der einen Teil des Packs (100) bildet, der unter dem Einsatz (10) angeordnet ist, eine Versiegelung ist.

11. Pack (100) nach einem der Ansprüche 9-10, wobei ein Leervolumen unter dem Einsatz (10) vorhanden ist.

12. Pack (100) nach einem der vorstehenden Ansprüche, umfassend eine Abreißlinie (160), die derart konfiguriert ist, dass sie ein Ablösen eines gewissen Teils (400) der Folie ermöglicht, um mindestens einen Teil des Einsatzes (10) freizugeben.

13. Pack (100) nach einem der vorstehenden Ansprüche, wobei der Einsatz (10) mindestens zwei Teile (101, 102) umfasst, die in Bezug zueinander beweglich sind, wobei eine offene oder geschlossene Kommunikation mit dem Innenvolumen des Packs (100) bereitgestellt wird.

14. Pack (100) nach einem der vorstehenden Ansprüche, wobei der Einsatz (10) ein Einlassloch (12) umfasst, durch das das Fluid eingespritzt wird, wobei das Einlassloch (12) in dem Einsatz (10) reversibel zugänglich konfiguriert ist.

15. Pack (100) nach einem der vorstehenden Ansprüche, das als eine Kapsel, als ein Beutel, als ein Tütchen oder dergleichen konfiguriert ist.

16. Pack (100) nach einem der vorstehenden Ansprüche, ferner umfassend Identifikationsmittel, umfassend Informationen über Verfahrensparameter, um das Nahrungsmittel- oder Getränkeprodukt herzustellen, wobei die Verfahrensparameter mindestens eines oder eine Kombination der Folgenden sind: Temperatur des eingespritzten wässrigen Fluids, Druck des eingespritzten gasförmigen Fluids, Gesamtvolumen von eingespritztem Gas und Wasser, Verarbeitungszeit usw.

17. Verwendung eines Packs (100) nach einem der vorstehenden Ansprüche zum Zubereiten eines Lebensmittel- oder Getränkeprodukts.

18. Verfahren zum Herstellen eines Lebensmittel- oder Getränkeprodukts unter Verwendung eines Packs (100) nach einem der Ansprüche 1-16, wobei das Verfahren die folgenden Schritte umfasst:
- optional Ablösen mindestens eines Teils der flexiblen Folie, die das Pack (100) konfiguriert, um mindestens einen Teil des Einsatzes (10) sichtbar zu lassen;
- Platzieren des Packs (100) in einer Getränkezubereitungsmaschine durch Platzieren des Einsatzes (10) in einem entsprechenden Empfänger in der Maschine;
- Einspritzen eines Fluids durch den Einsatz (10) in das Innenvolumen des Packs (100) zum Mischen und/oder Verdünnen und/oder Wiederherstellen des Lebensmittel- oder Getränkeprodukts innen und Abgeben des zubereiteten Lebensmittel- oder Getränkeprodukts durch den Einsatz (10).

19. Verfahren nach Anspruch 18, wobei der Einsatz (10) durch mindestens zwei relativ zueinander bewegliche Teile (101, 102) konfiguriert ist, wobei diese Bewegung die Kommunikation des Innenvolumens des Packs mit der Außenseite des Packs blockiert oder freigibt.

20. Verfahren nach einem der Ansprüche 18-19, wobei der Einsatz (10) durch mindestens zwei relativ zueinander bewegliche Teile (101, 102) konfiguriert ist, die sich am Ende der Zubereitung des Lebensmittels oder Getränks in Bezug zueinander in ihre ursprüngliche Position bewegen, wodurch eine Kommunikation des Innenvolumens des Packs mit der Außenseite des Packs blockiert wird, um Tropfen zu vermeiden.

## Revendications

1. Emballage (100) pour préparer un produit de type aliment ou boisson à partir d'un ou plusieurs ingrédients, l'emballage comprenant une pièce rapportée (10) à travers laquelle le produit de type aliment ou boisson est distribué, et de telle sorte qu'un fluide pour préparer le produit de type aliment ou boisson à partir des ingrédients est également distribué dans l'emballage par le biais de la pièce rapportée (10) à travers un trou d'injection (11) et dans une chambre d'entrée (191) ;
l'emballage comprenant également un récipient (20) étant configuré par au moins une feuille flexible pliée de manière à configurer un récipient où un ou plusieurs ingrédients peuvent être stockés ;
la pièce rapportée (10) étant enveloppée par l'au moins une feuille flexible configurant le récipient (20) ;
**caractérisé en ce que**
la chambre d'entrée communiquant avec le volume interne du récipient (20) est fermée par une membrane (190), cassable par pression.

2. Emballage (100) selon la revendication 1 dans lequel les dimensions, le matériau dont il est constitué et/ou l'épaisseur de la membrane (190) sont définis en fonction des paramètres de préparation, de la pression fluidique, du type d'ingrédient ou d'ingrédients à l'intérieur de l'emballage (100) et/ou de la température du fluide.

3. Emballage (100) selon l'une quelconque des revendications précédentes, dans lequel la membrane (190) est constituée de cellophane et/ou d'aluminium et/ou de polypropylène.

4. Emballage (100) selon l'une quelconque des revendications 1 à 3, dans lequel la membrane (190) recouvre la surface de la chambre d'entrée (191) et/ou une zone sensiblement petite autour de celle-ci.

5. Emballage (100) selon l'une quelconque des revendications 1 à 3, dans lequel la membrane (190) recouvre sensiblement toute la zone supérieure de la pièce rapportée (10) en communication avec le volume interne du récipient (20).

6. Emballage (100) selon l'une quelconque des revendications précédentes dans lequel l'au moins une feuille flexible est agencée en enveloppant et correspondant à la forme de la pièce rapportée (10) dans sa totalité à l'exception de la partie de la pièce rapportée (10) en communication directe avec le volume interne du récipient (20).

7. Emballage (100) selon la revendication 6 dans lequel l'au moins une feuille flexible est agencée fermement étanche sur la pièce rapportée (10).

8. Emballage (100) selon l'une quelconque des revendications 6 à 7 dans lequel la distance de la pièce rapportée (10) qui est enveloppée dans l'une quelconque de sa direction transversale le long de son axe longitudinal est constante.

9. Emballage (100) selon l'une quelconque des revendications 1 à 5 dans lequel l'au moins une feuille flexible est agencée fermement sur les parties frontale et arrière de la pièce rapportée (10) et correspondant à ces parties frontale et arrière, de telle sorte qu'il existe une partie de matériau de feuille flexible configurant une partie de l'emballage (100) disposée en dessous de la pièce rapportée (10).

10. Emballage (100) selon la revendication 9 dans lequel la partie de matériau de feuille flexible configurant une partie de l'emballage (100) disposée en dessous de la pièce rapportée (10) est un élément d'étanchéité.

11. Emballage (100) selon l'une quelconque des revendications 9 à 10 dans lequel il existe un volume vide en dessous de la pièce rapportée (10).

12. Emballage (100) selon l'une quelconque des revendications précédentes comprenant une ligne de déchirure (160) configurée de manière à permettre le détachement d'une certaine partie (400) de la feuille pour libérer au moins une partie de la pièce rapportée (10).

13. Emballage (100) selon l'une quelconque des revendications précédentes dans lequel la pièce rapportée (10) comprend au moins deux parties (101, 102) déplaçables l'une par rapport à l'autre, fournissant une communication ouverte ou fermée avec le volume interne de l'emballage (100).

14. Emballage (100) selon l'une quelconque des revendications précédentes dans lequel la pièce rapportée (10) comprend un trou d'entrée (12) à travers lequel le fluide est injecté, le trou d'entrée (12) configuré pour être accessible de manière réversible dans la pièce rapportée (10).

15. Emballage (100) selon l'une quelconque des revendications précédentes configuré sous la forme d'une capsule, d'un sachet, d'une pochette ou similaires.

16. Emballage (100) selon l'une quelconque des revendications précédentes comprenant en outre des moyens d'identification comprenant des informations sur des paramètres de processus pour produire le produit de type aliment ou boisson, les paramètres de processus étant au moins un élément ou une combinaison des éléments suivants : température du fluide aqueux injecté, pression du fluide gazeux injecté, volume total de gaz et eau injecté, temps de traitement, etc.

17. Utilisation d'un emballage (100) selon l'une quelconque des revendications précédentes pour préparer un produit de type aliment ou boisson.

18. Procédé pour produire un produit de type aliment ou boisson utilisant un emballage (100) selon l'une quelconque des revendications 1 à 16, le procédé comprenant les étapes consistant à :
- éventuellement détacher au moins une partie du film flexible configurant l'emballage (100) afin de laisser apparente au moins une partie de la pièce rapportée (10) ;
- placer l'emballage (100) dans une machine de préparation de boisson en plaçant la pièce rapportée (10) dans un receveur correspondant dans la machine ;
- injecter un fluide à travers la pièce rapportée (10) dans le volume interne de l'emballage (100) pour mélanger et/ou diluer et/ou reconstituer le produit de type aliment ou boisson à l'intérieur et distribuer le produit de type aliment ou boisson préparé à travers la pièce rapportée (10).

19. Procédé selon la revendication 18 dans lequel la pièce rapportée (10) est configurée par au moins deux parties relativement déplaçables (101, 102), ce déplacement bloquant ou libérant la communication du volume interne de l'emballage avec l'extérieur de l'emballage.

20. Procédé selon l'une quelconque des revendications 18 à 19 dans lequel la pièce rapportée (10) est configurée par au moins deux parties relativement déplaçables (101, 102) qui se déplacent l'une par rapport à l'autre vers leur position d'origine à la fin de la préparation de l'aliment ou de la boisson, bloquant toute communication du volume interne de l'emballage avec l'extérieur de l'emballage, pour éviter le ruissellement.
